Europäisches Patentamt

European Patent Office

Office européen des brevets

(11) Publication number: 0 392 100
A1

## EUROPEAN PATENT APPLICATION

(21) Application number: 89303663.2

(22) Date of filing: 13.04.89

(51) Int. Cl.5: H04N 5/57, G09G 1/00

(43) Date of publication of application:
17.10.90 Bulletin 90/42

(84) Designated Contracting States:
DE FR GB

(71) Applicant: International Business Machines
Corporation
Old Orchard Road
Armonk, N.Y. 10504(US)

(72) Inventor: Morrish, Andrew John
6, Torre Close, Boyatt Wood
Eastleigh, Hampshire, SO5 4RE(GB)
Inventor: Williams, Julian David
33, Kestrel Close
Marchwood Hampshire, SO4 4XL(GB)
Inventor: Eagle, David John
13, Benmore Gardens
Chandlers Ford Hampshire(GB)
Inventor: Clitheroe, Adrian Mark
2429, Condor Court
Raleigh North Carolina 27615(US)

(74) Representative: Blake, John
IBM United Kingdom Limited Intellectual
Property Department Hursley Park
Winchester Hampshire SO21 2JN(GB)

(54) Cathode ray tube display apparatus with improved intensity control.

(57) A cathode ray tube display in which the conventional brightness and contrast controls are replaced by two luminance controls (VR1 and VR2) controlling the luminance of the foreground (brightest level and the background (so-called black level). The background luminance control (VR1) is used to control the level of a variable amplitude raster signal from a raster signal generator (12) whilst the overall gain of the video input signal is controlled by a composite gain control signal (3) derived from the foreground control (VR2) and the background control (VR1) such that variation of the foreground luminance level does not affect the level of the background luminance level and vice versa. As the background luminance is increased, the overall gain is decreased to maintain the foreground luminance at the set level.

FIG. 1

## CATHODE RAY TUBE DISPLAY APPARATUS WITH IMPROVED INTENSITY CONTROL

The present invention relates to a cathode ray tube display apparatus having an improved brightness control.

Conventional cathode ray tube displays including those used for data/graphics display monitors as well as for television have two controls which allow the user to adjust the black level and maximum brightness. These are the contrast control which normally takes the form of a gain control in the video amplifier of the CRT and a separate brightness control which is usually achieved by varying the G1 grid voltage of the CRT.

The use of such brightness and contrast controls for data/graphics display monitors gives rise to numerous disadvantages:-

1) Increasing the brightness control affects both the maximum (foreground) brightness setting as well as the black level (background) level: this means that the adjustment of the brightness and contrast controls is interactive.

2) Varying the grid G1 voltage causes a colour tracking error in colour CRT's as the cut off varies between the guns.

3) National/International standards requirements are difficult to meet because of their requirements for contrast ratios at maximum control settings.

4) Very high peak power is drawn at maximum settings, unduly stressing the CRT, power supply, etc.

DE-C-3235853 describes a CRT arrangement in which a brightness control is set by a digital-to-analogue converter from a digital output signal of a controling computer. A separate digital-to-analogue converter handles the contrast control. The arrangement is essentially an implimentation of the conventional approach using logic control rather than the traditional variable resistors. Although DE-C-3235853 refers to independent controls, this refers to the independent control of the functions of contrast and brightness. In DE-C-3235853, the foreground luminance would be affected by variations of the background luminance (due to the use of the G1 grid) and variation of the background luminance will affect the colour point of the white and secondary colours where the CRT is a colour CRT.

An alternative way of providing the brightness control is to add a background raster signal to the video at the input to provide an offset to the black level. This has the disadvantage that an extra 20 volts of signal "headroom" is required in the video amplifier increasing the power dissipation and limiting the choice of high speed output transistors.

An object of the present invention is to mitigate these problems by providing a CRT which has two independently operable luminance controls, one connected to vary the foreground luminance and the other background luminance in an non-interactive manner.

According to the invention, a cathode ray tube display apparatus comprises a video amplifier for amplifying input video signals, a first (background) luminous intensity control for varying the luminous intensity of the black level of the CRT display and a second (foreground) luminous intensity control for varying the luminous intensity of the maximum brightness of the CRT display, characterised in that said first and second controls are connected to the video amplifier in such a manner that they operate independently of one another whereby variation of the maximum brightness does not vary the black level and variation of the black level does not vary the maximum brightness.

In the prefered embodiment, the background luminance control is by means of a raster signal whose amplitude is controlled by a DC voltage which can be set by the user: the signal is added into the video amplifier prior to an individual gain adjustment preset stage but after the overall gain adjustment stage. The overall gain of the video amplifier is varied by a composite DC voltage derived from the user's foreground luminance control's: DC voltage summed with a fraction of the background luminance DC control signal. The foreground luminance control operates in much the same way as the conventional contrast control except that as the background luminance is increased, the composite DC gain control signal decreases the overall gain, effectively maintaining a set foreground luminance level irrespective of the setting of the background luminance control.

The invention will now be particularly described, by way of example, with reference to the accompanying drawings, in which:-

Figure 1 is a functional block diagram showing the overall CRT control system,

Figure 2 shows the effect of varying the background and foreground luminance controls, and

Figure 3 is a circuit diagram showing the video amplifier with the two independent controls for foreground and background luminance.

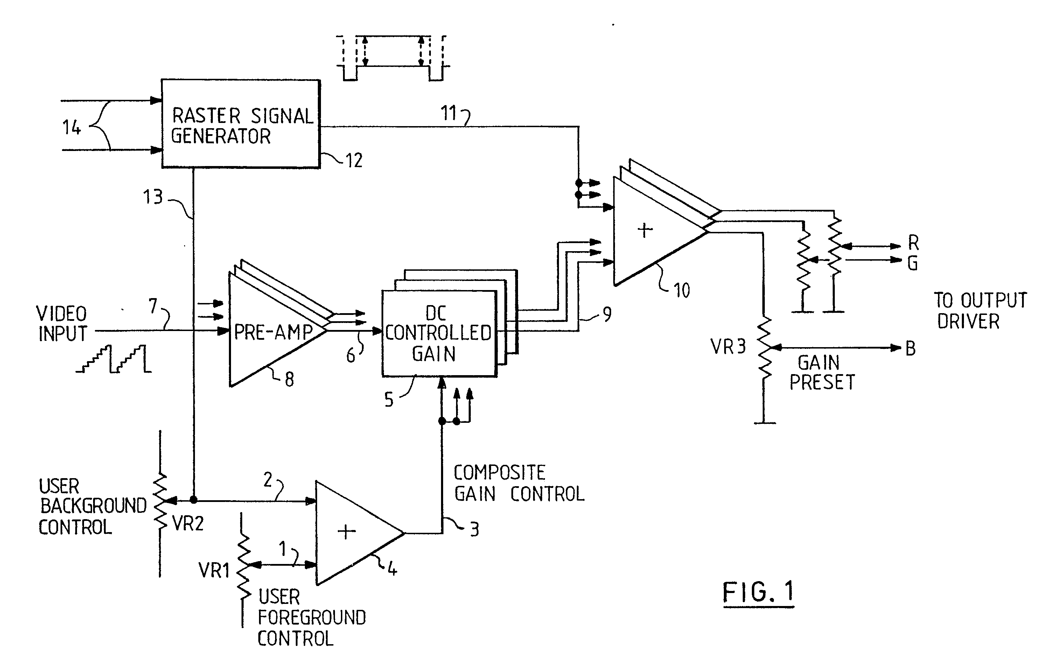

Referring now to Figure 1, variable resistor VR1 is used to vary the foreground luminance by summing the DC voltage on line 1 with a fraction of the background luminance control voltage on line 2 produced by means of variable resistor VR2. The composite signal appearing on the output 3 of summing circuit 4 is used to control the gain of amplifier stage 5, the input 6 of which receives the video input signal on line 7 via preamplifier 8. The output 9 of the amplifier stage 5 is applied as one input of summing circuit 10, the other input of which is received from the output 11 of raster signal generator 12 which produces a square ware signal. The amplitude of the square ware output signal of the generator 12 is dependent upon a DC voltage derived from the background luminance control VR2 on line 13 . The inputs 14 of the raster signal generator 12 receive line and frame blanking signals. The output on line 11 (which is dependent on the background luminance setting) is added to the signal on line 9 (which is dependent on both the foreground and background luminance settings) in summing circuit 10 prior to the video amplifier's individual gain adjustment preset stage represented by variable resistor VR3. The output of the summing amplifier 10 is fed to the power amplifier stage (not shown) of the video amplifier. For a monochrome CRT display, only one channel is needed. However, for a colour CRT display, three colour channels are needed to provide red, green and blue output signals which, after amplification in the power amplifier stage are applied to the appropriate cathodes of the CRT. Each colour channel will consist of stages 8, 5, 10 and VR3. The raster signal generator 12 and summing amplifier are common to all channels. In this way, the background raster signal is modified in amplitude by the individual colour balance controls giving good colour tracking.

As indicated above, the overall gain produced by amplifier stage 5 (and which in conventional arrangements is used for contract control) is under control of the composite gain control signal in line 3. In contrast to conventional arrangements however, as the background luminance increases, the overall gain is decreased to maintain a set foreground luminance level irrespective of the setting of the background luminance setting.

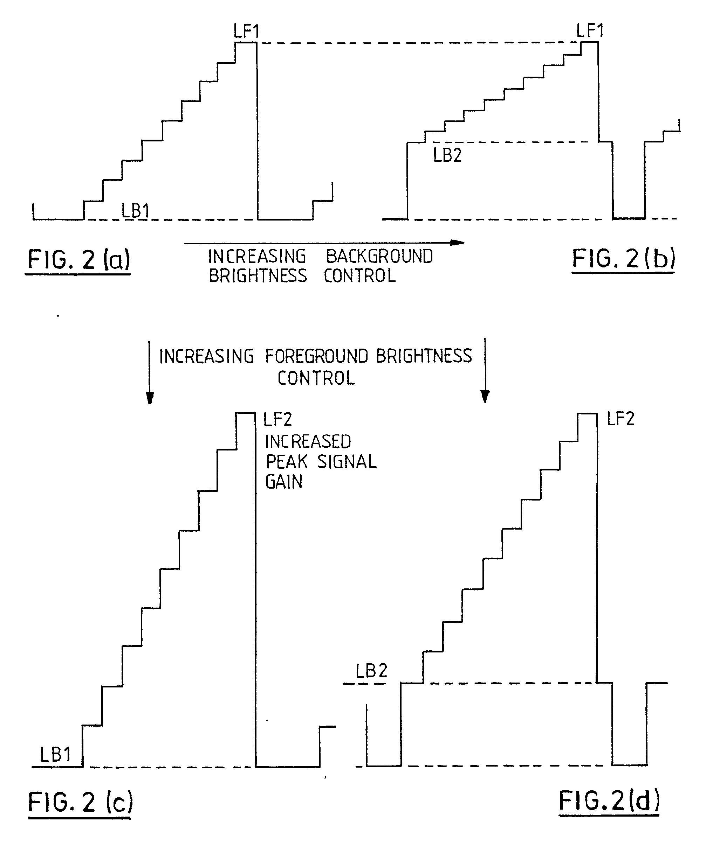

The effect of the arrangement is shown in Figure 2 in which Figure 2(a) represents the foreground and background luminance levels LF1 and LB1 respectively. In Figure 2(b) the background level has been increased to LB2 by varying variable resistor VR2 but the foreground level remains constant at LF1 due to an equal number of smaller incremental steps. Figures 2(c) and 2(a) show the effect of increasing the foreground luminance LF1 to LF2 using the variable resistor VR1 whilst the background luminance levels (LB1 and LB2 respectively) remain constant.

It will be evident from Figure 2 that the user can independently adjust the foreground and background luminance intensities to adjust the contrast without the adjustment of one luminance level affecting the other luminance level.

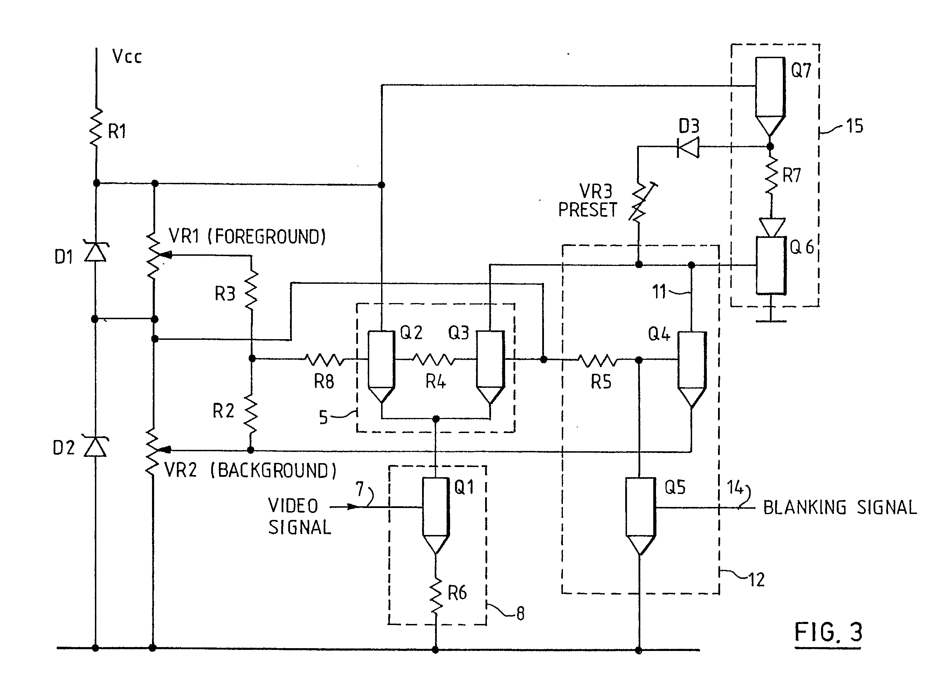

Figure 3 is a circuit diagram of an implementation of the functional arrangement shown in Figure 1. The same reference numerals are used for the same parts. Transistor Q1 and resistor R6 (connected in emmiter follower relationship) convert the input voltage signal on input 7 to a current sorce which is split by transistors Q2 and Q3 connected as a long tailed pair, dependant upon the differential base voltage controlled by both VR1 and VR2.

The output of transistor Q3 is fed into a current mirror formed by diode D3 and transistor Q6 whose gain is controlled by the overall gain preset variable resistor VR3. Added into the current sorce output of transistor Q3 is the raster signal generated by transistor Q4 and Q5 and which is varied directly by the background variable resistor VR2.

Diodes D1 and D2, resistors R1, R2, R3 and R4 form a diode, resistor network which constitutes the summing amplifier 4, Figure 1. Transistors Q6 and Q7 and resistor R7 are connected to form a cascode amplifier 15 which constitutes the output driver of the amplifier. For simplicity, only one channel is shown.

Thus, the functions outlined in the block diagram of Figure 1 are achieved with no additional circuitry cost than is typical for conventional methods of contrast and brightness control. There is increased user controllability since the foreground and background luminance controls are non-interactive and due to their functions being clearly defined in terms of their effect on the luminance of the displayed image or picture.

Although the user controls have been shown as variable resistors, the invention is also clearly applicable to arrangements in which controls are derived from digital/logical circuits.

## Claims

1. A cathode ray tube display apparatus comprising a video amplifier for amplifying input video signals, a first (background) luminous intensity control for varying the luminous intensity of the black level of the CRT display and a second (foreground) luminous intensity control for varying the luminous intensity of the maximum brightness of the CRT display, characterised in that said first and second controls are connected to the video amplifier in such a manner that they operate independently of one another whereby variation of the maximum brightness does not vary the black level and variation of the black level does not vary the maximum brightness.

2. Display apparatus as claimed in claim 1, in which the first control is connected to control the amplitude of a raster signal which is input into the video amplifier after an overall gain adjustment stage of the amplifier, in which the gain of said overall gain adjustment stage is controlled by a composite gain control signal derived from the output of the second control and a fraction of the output of the first control, the composite gain control signal decreasing as the first control signal increases.

3. Display apparatus as claimed in claim 2, in which the output of the second control and a fraction of the output of the first control are summed together in a summing amplifier to provide said composite gain control signal.

4. Display Apparatus as claimed in claim 2 or claim 3, in which the raster signal is input into a gain adjustment preset stage of the video amplifier after the overall gain adjustment stage.

5. Display apparatus as claimed in claim 4, in which the output of the overall gain adjustment stage and the raster signal are applied to a second summing amplifier whose output is connected to the cathode of the cathode ray tube.

6. Display apparatus as claimed in any preceding claim in which the CRT is a colour CRT and in which the video amplifier has three channels, one for each of the primary colours, the first and second luminance controls being connected to provide common control signals for each channel.

FIG. 1

RASTER SIGNAL GENERATOR — 12

VIDEO INPUT — 7

PRE-AMP — 8

DC CONTROLLED GAIN — 5

USER BACKGROUND CONTROL — VR2

USER FOREGROUND CONTROL — VR1

COMPOSITE GAIN CONTROL

GAIN PRESET — VR3

TO OUTPUT DRIVER

R
G
B

EP 0 392 100 A1

FIG. 2 (a)

INCREASING BACKGROUND
BRIGHTNESS CONTROL

FIG. 2 (b)

INCREASING FOREGROUND BRIGHTNESS
CONTROL

LF2
INCREASED
PEAK SIGNAL
GAIN

FIG. 2 (c)

FIG.2 (d)

FIG. 3

EP 0 392 100 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 651 064 (PARKER et al.)<br>* Column 4, line 44 - column 5, line 38; figures 4,5a-5c * | 1 | H 04 N 5/57<br>G 09 G 1/00 |
| A | IBM TECHNICAL DISCLOSURE BULLETIN, vol. 27, no. 7B, December 1984, pages 4346-4348, New York, US; M. KOBAYASHI et al.: "Brightness and contrast control for CRT monitor"<br>* Page 4347, line 2 - page 4348, line 11; figures 2-4 * | 1 | |
| D,A | DE-A-3 235 853 (SIEMENS)<br>* Page 3, line 32 - page 4, line 3; figure * | 1 | |

TECHNICAL FIELDS SEARCHED (Int. Cl.5)

H 04 N

The present search report has been drawn up for all claims

| Place of search | Date of completion of the search | Examiner |
|---|---|---|
| THE HAGUE | 18-12-1989 | BEQUET T.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)